Europäisches Patentamt

European Patent Office

Office européen des brevets

(11) Veröffentlichungsnummer: **0 247 964**
**A2**

## (12) EUROPÄISCHE PATENTANMELDUNG

(21) Anmeldenummer: **87730058.2**

(22) Anmeldetag: **15.05.87**

(51) Int. Cl.⁴: **H 04 Q 5/02**

(30) Priorität: **26.05.86 DE 3617831**

(43) Veröffentlichungstag der Anmeldung:
**02.12.87 Patentblatt 87/49**

(84) Benannte Vertragsstaaten: **AT BE DE GB**

(71) Anmelder: **Siemens Aktiengesellschaft Berlin und München**
**Wittelsbacherplatz 2**
**D-8000 München 2 (DE)**

(72) Erfinder: **Schade, Gerd, Dipl.-Ing.**
**Am Dorfanger 13**
**D-1000 Berlin 26 (DE)**

**Schüller, Ulrich, Dipl.-Ing.**
**Rhinstrasse 23**
**D-1000 Berlin 49 (DE)**

(54) **Anschaltung von Teilnehmerendgeräten an eine Gesellschaftsleitung.**

(57) Die Erfindung betrifft eine Schaltungsanordnung zur Anschaltung von Teilnehmerendgeräten an eine Gesellschaftsleitung.

Das Teilnehmerendgerät (TEG) wird über die erste aktive Gabelschaltung (GAT) mit dem Teilnehmerempfangsverstärker (EVT) und dem Teilnehmersendeverstärker (SVT) mit der zweiten aktiven Gabelschaltung (GAL) sowie dem Leitungssendeverstärker (SVL) und dem Leitungsempfangsverstärker (EVL) verbunden, so daß die Anschaltung des zweidrähtigen Teilnehmerendgerätes (TEG) an die zweidrähtige Gesellschaftsleitung (GL) über einen in Sende- und Empfangsrichtung voneinander unabhängigen Vierdrahtleitungsabschnitt erfolgt.

Derartige Schaltungsanordnungen dienen zur Anschaltung von Teilnehmerendgeräten an Gesellschaftsleitungen bzw. Partylinesystemen

FIG 1

EP 0 247 964 A2

Bundesdruckerei Berlin

**Beschreibung**

Anschaltung von Teilnehmerendgeräten an eine Gesellschaftsleitung

Die Erfindung betrifft eine Schaltungsanordnung zur Anschaltung von Teilnehmerendgeräten an eine Gesellschaftsleitung.

Die in dieser Technik bevorzugt ausgeführten Befehls- und Wahlrufanlagen, die vornämlich der Nachrichtenübermittlung innerhalb großer Unternehmen und Behörden, wie den Eisenbahn-, Straßen- und Binnenschiffahrtsverwaltungen sowie den Energieversorgungsunternehmen dienen, müssen mit den Teilnehmerendgeräten hochohmig an die Gesellschaftsleitung angeschlossen werden, um einerseits eine gleichmäßige Energieversorgung der an die Gesellschaftsleitung angeschalteten Teilnehmerendgeräten sicherzustellen und andererseits die Dämpfung der Gesellschaftsleitung so zu begrenzen, daß noch eine ausreichend große Anzahl von Teilnehmerendgeräten an die Gesellschaftsleitung angeschaltet werden kann. Zu diesem Zweck sind die Teilnehmerendgeräte durch spezielle Wahlruffernsprecher mit passiven Gabelschaltungen ausgestattet, die je nach Leitungsart (unbespulte Kabel, Freileitungen, bespulte Kabel) und Leitungsanschluß des Teilnehmerendgerätes über sogenannte Linien-Übertrager und/oder Fernleitungs-Übertrager entsprechend dimensioniert sind (Siemens-Druckschrift N 145/1208, "Fernsprechen auf Gesellschaftsleitungen, Wahlrufanlage W11", PA 374.5, Seite 11 und folgende).

Wegen der beim Verbindungsaufbau über die Gesellschaftsleitung zu übertragenen Induktivimpulse (Belegungs-, Wahl-, Melde-, Auslöseimpulse) ist es erforderlich, die entsprechend der Anlagenstruktur des Gesellschaftsleitungssystems eingesetzten Übertager (Linien-, Fernleitungs-Übertrager) mit realtiv hoher Induktivität auszustatten, um auch bei ungünstigen Übertragungsverhältnissen, wie beispielsweise bei mehreren längeren Leitungsabschnitten mit eine Vielzahl von Teilnehmerendgeräten, noch eine genügend große Impulsreichweite zu erhalten.

Des weiteren ist beim Einsatz derartiger Induktivwahlverfahren darauf zu achten, daß die Gesellschaftsleitungen nicht mit anderen Leitungen parallel geführt sind, da sonst Störbeeinflussungen auf den anderen Leitungen nicht auszuschließen sind. Dies trifft im besonderen Maße für gemietete Postleitungen zu, in deren gemeinsamen Kabel derartige Gesellschaftsleitungssysteme nicht enthalten sein dürfen. Die der Erfindung zugrunde liegende Aufgabe besteht darin, die Teilnehmerendgeräte derart an die Gesellschaftsleitung anzuschließen, daß keine übertragungstechnisch bedingten Störbeeinflussungen in eng benachbarten Leitungen auftreten und darüber hinaus die relativ hohen Induktivitäten der Übertrager (Linien- und Fernleitungs-Übertrager) reduziert werden können, ohne jedoch die Anlagen in Bezug auf ihre Konfiguration und die Anzahl der anschaltbaren Teilnehmerendgeräte reduzieren zu müssen. Erfindungsgemäß wird dies durch die Kombination der Merkmale des Patentanspruchs 1 erreicht.

Als wesentlich für die Erfindung ist anzusehen, daß die Anpassung der Teilnehmerendgeräte an die jeweilige Anschlußleitung selbst und die Anpassung an die Gesellschaftsleitung durch die miteinander verbundene erste und zweite aktive Gabelschaltung auf beiden Seiten – der Seite zum Teilnehmerendgerät und der Seite zur Gesellschaftsleitung – unabhängig voneinander erfolgt und innerhalb des sich dadurch gebildeten Vierdrahtleitungsabschnittes zwischen dem Teilnehmerendgerät und der Gesellschaftsleitung durch unterschiedliche Pegelbeeinflussung der Sende- und Empfangsrichtung der Restdämpfungswert in den Bereich von 0 bis 1 dB heruntergesetzt werden kann. Durch diese Maßnahme kann einerseits die hochohmige Anschaltung des Teilnehmerendgerätes an die Gesellschaftsleitung beibehalten werden und andererseits das in anderen Fernmeldeanlagen schon vielfach eingesetzte, gegenüber dem Induktivwahlverfahren mit sehr viel geringerer Störwirkung behaftete Mehrfrequenzwahlverfahren (MFV) angewandt werden.

Ein weiterer Vorteil ergibt sich daraus, daß für die Teilnehmerendgeräte zum Anschluß an die Gesellschaftsleitung keine besonders ausgestatteten Wahlruffernsprecher benötigt werden, sondern die normalen Teilnehmerendgeräte mit Tastwahl in Tonwahl-Technik (Mehrfrequenzverfahren MFV) oder mit Nummernscheibenwahl in Impulswahl-Technik eingesetzt werden können. Die letztgenannten Teilnehmerendgeräte mit Nummernscheibe übertragen die Impulswahlinformationen in Empfangseinrichtungen, und können dort durch entsprechend vorgesehene Umwerteeinrichtungen in die benötigten MFV-Signale umgewandelt und anschließend in Richtung zur Gesellschaftsleitung ausgesendet werden. Im Zusammenhang damit ist gemäß einer vorteilhaften Ausgestaltung der Erfindung vorgesehen, daß der Leitungsempfangsverstärker eingangsseitig mit der Leitungsempfangseinrichtung verbunden ist, der Leitungssendeverstärker eingangsseitig mit der Leitungssendeeinrichtung verbunden und die Teilnehmerempfangsverstärker ausgangsseitig mit der Teilnehmerempfangseinrichtung gekoppelt ist, so daß unabhängig vom gewählten Wahlverfahren (Impulswahl, MFV-Wahl) von der Teilnehmerempfangseinrichtung die gewünschte MFV-Wahlinformation mittels der Leitungssendeeinrichtung auf die Gesellschaftsleitung ausgesendet werden kann.

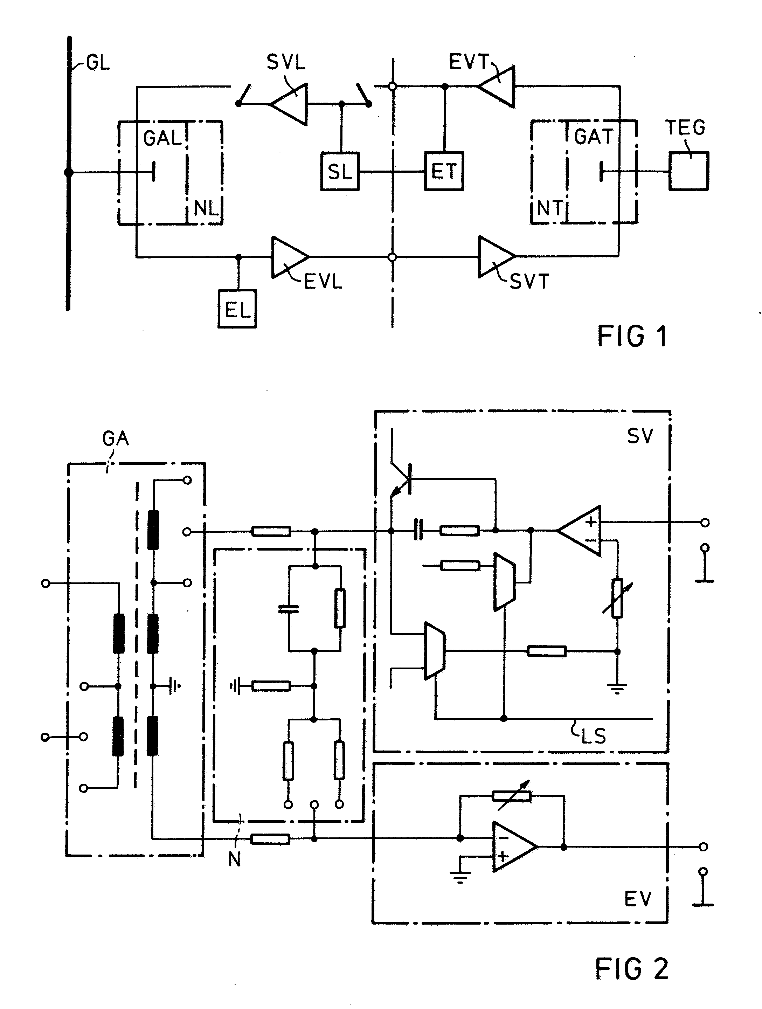

Die Erfindung wird in einem figürlich dargestellten Ausführungsbeispiel näher erläutert, wobei Figur 1 die Anschaltung eines Teilnehmerendgerätes an die Gesellschaftsleitung in Form eines Blockschaltbildes darstellt und Figur 2 schaltungstechnische Detaillösungen der aktiven Gabelschaltung erkennen läßt.

Die Verbindung zwischen der Gesellschaftsleitung GL und dem Teilnehmerendgerät TEG ist durch eine Vierdraht-Verbindung realisiert, deren Abschlüsse durch eine erste Gabelschaltung GAT zum Teilnehmerendgerät TEG und durch die zweite aktive Gabelschaltung GAL zur Gesellschaftsleitung GL vorgenommen wird. Innerhalb der ersten aktiven Gabelschaltung GAT wird das Teilnehmerendgerät TEG durch die Teilnehmernachbildung NT abgeschlossen, während innerhalb der zweiten aktiven Gabelschaltung GAL die Gesellschaftsleitung GL mit der Leitungsnachbildung NL abgeschlossen ist. Weiterhin ist für das Teilnehmerendgerät TEG der Teilnehmerempfangsverstärker EVT vorgesehen, dessen Ausgang einerseits mit der Teilnehmerempfangseinrichtung ET und andererseits mit dem Eingang des Teilnehmersendeverstärkers SVL verbunden ist. Die Teilnehmerempfangseinrichtung ET, die der Aufnahme der Wahlinformationen dient, steuert die Leitungssendeeinrichtung SL, die mit dem Eingang des Leitungssendeverstärkers SVL verbunden ist. Die nicht bezeichneten Anschaltekontakte des Leitungssendeverstärkers SVL deuten an, daß dieser nur bedarfsweise angeschaltet wird.

Die von der Gesellschaftsleitung GL zum Teilnehmerendgerät TEG übertragenen Informationen werden durch den Leitungsempfangsverstärker EVL empfangen und anschließend über den Teilnehmersendeverstärker SVT und der ersten aktiven Gabelschaltung GAT zum Teilnehmerendgerät TEG übertragen. Zum Empfang und zur Auswertung der ankommenden Wahlinformationen ist parallel zum ankommenden Empfangsverstärker EVL die Leitungsempfangseinrichtung EL angeschaltet, die im Falle einer gewünschten Gesprächsverbindung sowohl den Rufstrom als auch die Durchschaltung zum Teilnehmerendgerät TEG steuert.

Figur 2 zeigt die schaltungstechnische Realisierung einer aktiven Gabelschaltung, wobei die Gabelschaltung GA den Übertrager enthält, der die zweidrähtige Verbindung zur Gesellschaftsleitung GL bzw. zum Teilnehmerendgerät TEG in den vierdrähtigen Leitungsabschnitt umsetzt. Die Nachbildungsschaltung N deutet durch die nichtbezeichneten Schaltvarianten an, daß die Gesellschaftsleitung bzw. das Teilnehmerendgerät mit verschieden großen Schaltelementen nachgebildet werden muß. Gleichzeitig ist angedeutet, daß die jeweiligen Verstärkereinrichtungen - der Sendeverstärker SV bzw. der Empfangsverstärker EV - durch die nicht bezeichneten Regelwiderstände hinsichtlich ihres Sende- und Empfangspegels gesondert gesteuert werden können.

**Patentansprüche**

1. Schaltungsanordnung zur Anschaltung von Teilnehmerendgeräten an eine Gesellschaftsleitung **gekennzeichnet durch** die Kombination der Merkmale

1.1 die Schaltungsanordnung weist eine mit einem Teilnehmerempfangsverstärker (EVT) und mit einem Teilnehmersendeverstärker (SVT) verbundene erste aktive Gabelschaltung (GAT) mit einer Teilnehmernachbildung (NT) auf,

1.2 die Schaltungsanordnung weist eine mit einem Leitungssendeverstärker (SVL) und mit einem Leitungsempfangsverstärker (EVL) verbundene zweite aktive Gabelschaltung (GAL) mit einer Leitungsnachbildung (NL) auf,

1.3 die erste aktive Gabelschaltung (GAT) ist mit der zweiten aktiven Gabelschaltung (GAL) derart funktionell verbunden, daß eine zwischen dem Teilnehmerendgerät (TEG) und der Gesellschaftsleitung (GL) entstandene Vierdrahtverbindung bis auf einen Restdämpfungswert im Bereich von 0 bis 1 dB entdämpft ist.

2. Schaltungsanordnung nach Anspruch 1, **gekennzeichnet durch** die Kombination der Merkmale

2.1 der Leitungsempfangsverstärker (EVL) steht eingangsseitig mit einer Leitungsempfangseinrichtung (EL) in Verbindung,

2.2 der Leitungssendeverstärker (SVL) steht eingangsseitig mit einer Leitungssendeeinrichtung (SL) in Verbindung,

2.3 der Teilnehmerempfangsverstärker (EVT) steht ausgangsseitig mit einer Teilnehmerempfangseinrichtung (ET) in Verbindung,

2.4 die Leitungssendeeinrichtung (SL) ist von der Teilnehmerempfangseinrichtung (ET) steuerbar.

FIG 1

FIG 2